# EUROPEAN PATENT APPLICATION

(11) **EP 1 263 192 A2**
(43) Date of publication of application: **04.12.2002**
(21) Application number: 02252939.0
(22) Date of filing: 25.04.2002
(51) Int. Cl.: H04M 1/02, H04M 1/23, G06F 3/023

(54) **Foldable keyboard for a mobile telephone**

(30) Priority: 16.05.2001 US 859067
(71) Applicant: Nokia Corporation, 02150 Espoo (FI)
(72) Inventor: Finke-Anlauff, Andrea, 38104 Braunschweig (DE)
(74) Representative: Read, Matthew Charles

(57) **Abstract**

A compact computer device which may comprise a mobile telephone or a game, is provided with a display screen (3) and a full function keyboard (5,6) for use as a personal information manager or similar purpose. The keyboard is constructed in two portions positioned on opposite sides of the screen of the device to allow holding with both hands and operation with the thumb.

## Description

This invention relates to a keyboard for use in a device such as a mobile telephone.

Mobile telephones and similar communication devices are rapidly expanding in use and function. Such devices will soon provide Internet access, personal information management, facsimile, messaging, in addition to telephone communication. To accomplish this there is a need to provide keyboards compatible with the more complex applications to which the mobile device will be adapted. Full function keyboards, such as the standard QWERTY typing array of keys and buttons, are difficult to provide while maintaining the compact size required in the mobile device. Such devices on the market today are cumbersome and often require a separate belt pouch for carrying the mobile device on the person of the user. In addition it is necessary to coordinate on screen displays for adaptation to the variety of functions.

It is a purpose of this invention to provide a simple and inexpensive means of providing a full function keyboard to accommodate the burgeoning applications to which a mobile communication device is adapted.

A personal hand held computer appliance is provided with a compact full function keyboard that allows the user to place the unit in the palm of his or her hands and operate the keys on the keyboard with the thumbs. To accomplish this the appliance is constructed as a flat generally rectangular unit having a top operational surface. A display screen is centrally positioned in the operational surface to divide the surface into a left and right panel. The left and right panels are used to accommodate the keyboard. Each panel is constructed with an array of keys, which, in the case of a standard Qwerty style keyboard, are arranged on either side of the screen to provide a full keyboard. The keyboard is accordingly split into two substantially equal arrays displaced on either side of the screen. The size of the appliance is sufficient to allow convenient spacing of the keys while maintaining accessibility for operation by the thumbs of the user.

The invention is described by way of example in more detail below with reference to the accompanying drawings in which:
Figure 1 is a top view of a communications device according to the invention in a closed position;
Figure 2 is a top view of the communications device in an open position;
Figure 3a is a side view of the communications device in the closed position;
Figure 3b is a schematic illustration of the display orientation in the closed position;
Figure 3c is a schematic illustration of the display orientation in the open position;

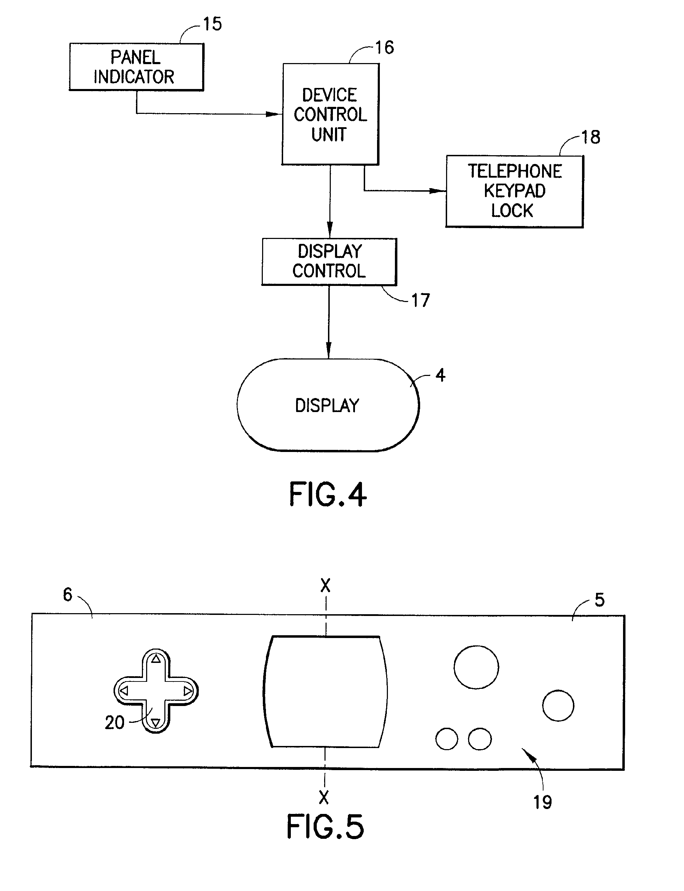

Figure 4 is a block diagram of the control system of the communication device;
Figure 5 is a top view of an alternative embodiment of this invention;
Figure 6 is a top view of an alternative embodiment of this invention; and
Figure 7 is a side view of the embodiment of figure 6.

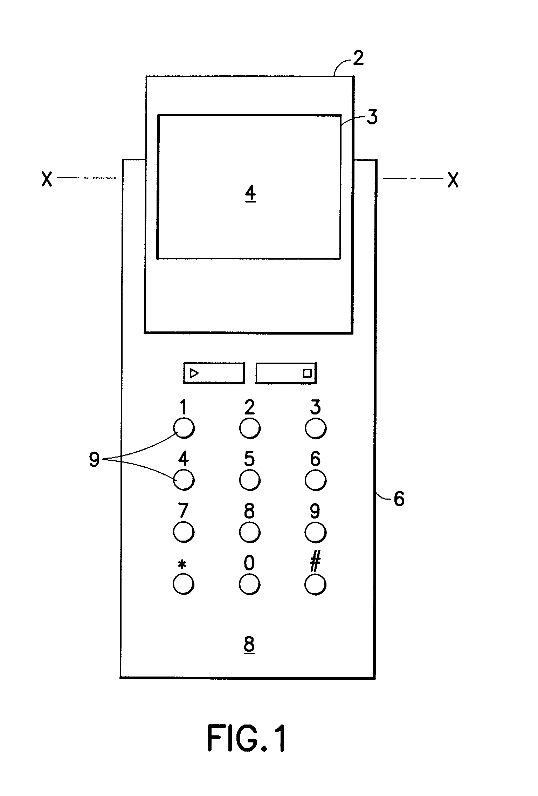

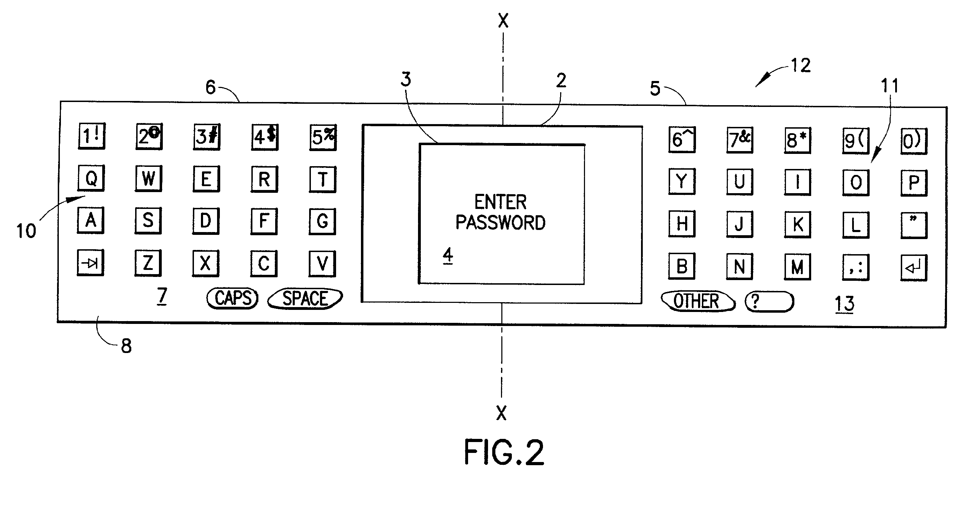

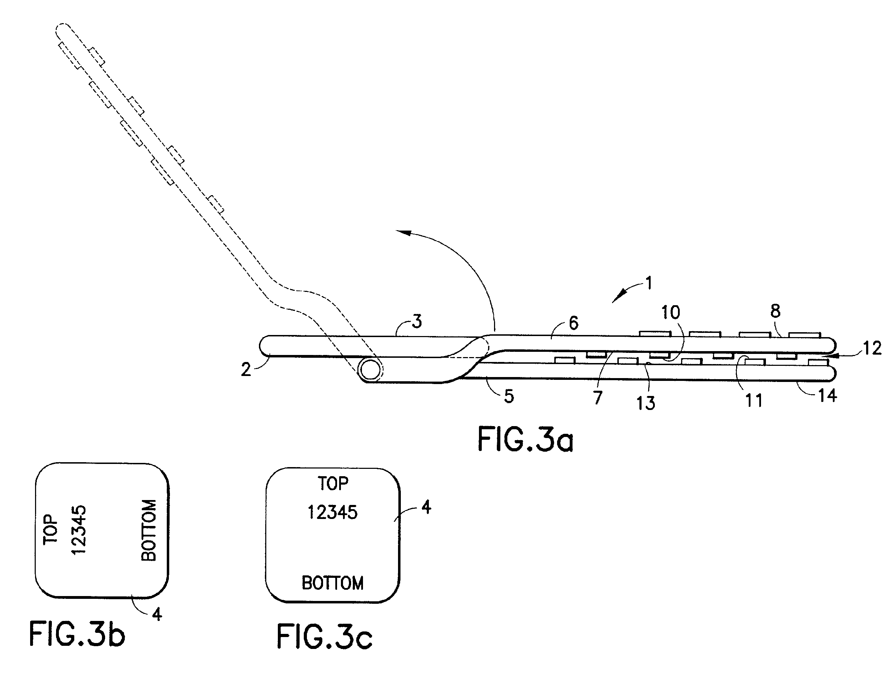

For the purpose of illustration, the invention will be described with reference to a mobile telephone, but is applicable to other devices such as pagers, game units and the like. The mobile telephone has a full function keyboard. As shown in figure 3a, a mobile telephone 1 is constructed having a body 2. The body 2 encloses a screen 3 which provides a display 4 for communicating pertinent information to the user in response to actions by the user. The mobile telephone 1 is constructed having two panels 5 and 6 which are mounted on the body 2. In figure 3, panel 5 is shown fixed to body 2 as a separated component, but it could also be constructed integrally with body 2. Panel 6 is rotatable on the body 2 about an axis x-x as shown in figures 1 and 2.

In a first position, referred to as the closed position, panel 6 is rotated into overlapping alignment with panel 5, as shown in figure 3a. Rotating panel 6 has two opposing flat faces 7 and 8. Face 7 is the inner face when panel 6 is in the closed position and face 8 is the outer face in the closed position. In the preferred embodiment, face 8 contains a standard telephone keypad 9 for use when the mobile phone 1 is operating strictly in the communication mode. In the closed position, the device operates as a standard operating mobile telephone with the display 4 of screen 3 oriented in alignment with keypad 9.

To provide the full function keyboard of the preferred embodiment of this invention, the key and button array 12, used for the particular application, is divided in half and arranged on left and right keyboard portions 10 and 11. To facilitate operation of the keyboard, it is designed for thumb actuation by both hands. This makes it convenient to hold the small device in both hands and operate the keyboard portions 10 and 11 accurately and efficiently.

As shown best in figure 3a, the left hand keyboard portion 10 is constructed on face 7 of rotating panel 6 on the opposite side of telephone keypad 9. The right hand keyboard portion 11 is constructed on upper face 13 of panel 5. A back cover is assembled on the face 14 of panel 5. To insure a compact engagement of panels 5 and 6 in the closed position, the portions of key array 12 on the opposing panel faces 7 and 13 are offset to avoid interference in the closed position.

To operate the keyboard array 12, panel 6 is rotated approximately 180° to the open position to form a substantially flat unit having right and left keyboard portions separated by screen 3 as shown in figure 2. By holding the left and right hand portions in either hand, the keyboard, thus extended, can be conveniently operated using thumbs. In the open position, outer face 8 of panel 6 is oriented away from the user.

The display 4 of screen 3 is controlled for orientation in two positions depending on the mode of use. In the closed position, the display 4 is oriented in alignment with the keypad 9, while in the open position the display 4 is aligned with the function key array 12. As shown in figures 3b and 3c, display orientation is rotated 90° between the mobile telephone mode in which panel 6 is in the closed position to the full function mode when panel 6 is in the open position. This is accomplished by providing a panel position indicator 15 which signals control unit 16 when the panel 6 is opened or closed. Control unit 16 may be a microprocessor, display driver or other means including hardware or software. This could be automatic or by a manual button operated by the user. The control unit 16 will signal the display control 17 to orient the position of the display as needed. In addition, in the open position, keypad 9 will be locked in an inoperative mode by telephone keypad lock 18.

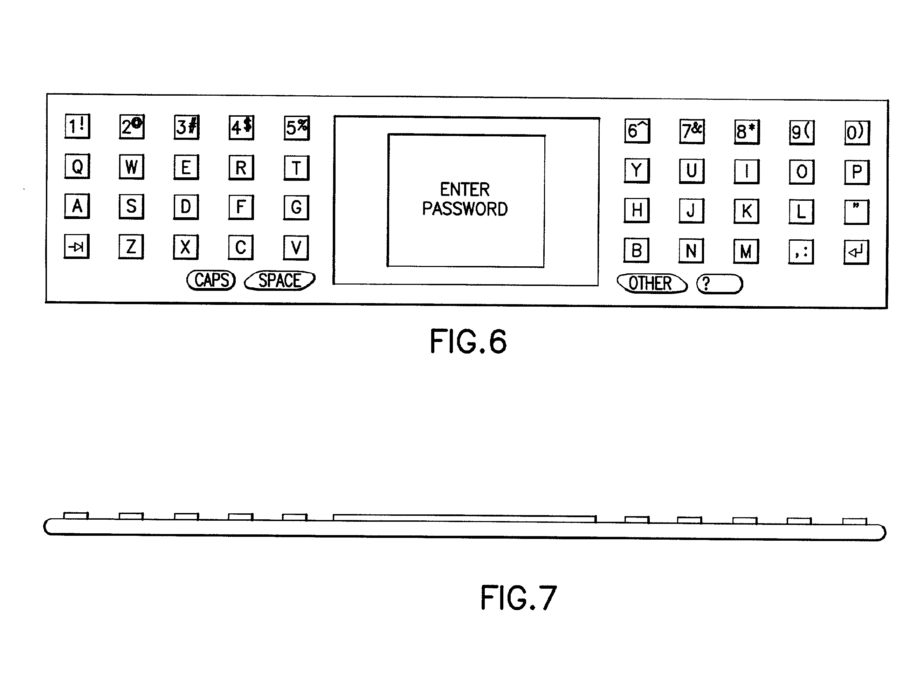

In the alternative embodiment shown in figure 5, instead of a keyboard, a game controller keypad is provided. The game keyboard consists of action buttons 19 and motion pad 20 constructed in panels 5 and 6 respectively. The telephone keypad 9 is constructed in the reverse side of panel 6, as described above. As a further alternative, the device could be designed without a communication capability and used as a game unit only.

In this manner, a simple and compact keyboard is provided in operative association with a mobile communications device. It should be noted that other key arrays can be used such as the French AZERTY or the German QWERTZ(U). The device would also be useful as a microprocessor based game unit driven by game software or firmware.

### Alternative Embodiment

The keyboard array described above is also useful without necessarily associating it with a mobile communications device. For use as a computer device such as a personal information manager and the like, the full function Qwerty style keyboard provides convenient access for small devices and overcomes the awkwardness of similar devices in the prior art.

In this embodiment, a device 30 is formed of a thin planar oriented enclosure 31 which contains a processor and other components suitable for the purpose for which the device is designed. The enclosure 31 is formed by the cooperation of a top plate 32 which provides the operating surface of the device and a back cover 33 which defines the remaining bottom and side walls of the enclosure. A display screen 34 is mounted in the top plate 32 in a centrally located position. A standard Qwerty keyboard is divided into left and right portions 35 and 36, as shown in figure 6 and 7. The portions 35 and 36 are positioned on either side of the display screen 34 on the top plate 32. Each portion contains an array of keys 37 positioned in the familiar arrangement. Other types of keyboards can be used which are adapted to the particular purpose or application of the device 30. By holding the left and right hand portions in either hand, the keyboard can be conveniently operated using thumbs. The full function keyboard arranged as described herein provides a convenient and efficient utility for all of the keys without significant interference.

## Claims

1. An electronic device for operation in multiple applications comprising:
an enclosure having a top cover which provides the operational surface of the device;
a screen constructed at a central location in said operational surface to provide a visible display of information to the user, said screen dividing the operational surface into left and right panels; and
a function keyboard constructed in two portions, a first portion constructed in said left panel and a second portion constructed in said right panel, each of said function keyboard portions having an array of keys consistent with a selected function, wherein said function keyboard is exposed for operative engagement by the user.

2. An electronic device for operation in multiple applications, according to claim 1, wherein said function keyboard comprises a full function QWERTY key array split in said first and second portions.

3. A function keyboard for use in a personal computer device, said computer device having an operational surface and a screen for displaying information to the user, said screen dividing said operational surface into left and right panels, said keyboard comprising:
a first array of keys mounted in said left panel;
a second array of keys mounted in said right panel; and
wherein said left and right arrays are positioned to allow operation thereof by use of thumbs while the device is held in the hands of the user.

4. A function keyboard for use in a personal computer device, said computer device having an operational surface and a screen for displaying information to the user, said screen dividing said operational surface into left and right panels, said keyboard, as described in claim 3, wherein said function keyboard comprises a full function QWERTY key array split in said left and right panels.

5. A keyboard according to claim 3 or 4 in association with a computer device.

6. A keyboard according to claim 3 or 4 in association with a mobile telephone.

7. A device as claimed in claim 1 or 2 and comprising a mobile telecommunications device.

8. An electronic device for operation in multiple applications comprising:
an enclosure (2) having a top cover which provides the operational surface of the device;
a screen (3) constructed at a central location in said operational surface to provide a visible display of information to the user, said screen dividing the operational surface into left and right panels; and a function keyboard, **characterized in that**
the function keyboard is constructed in two portions that comprise panels (5,6) disposed on opposite sides of the screen respectively, each of said function keyboard portions having an array of keys consistent with a selected function, wherein said function keyboard is exposed for operative engagement by the user.

9. A device according to any preceding claim wherein the keyboard is foldable.
